# DEMANDE DE BREVET EUROPEEN

(11) **EP 3 144 812 A1**
(43) Date de publication de la demande: **22.03.2017**
(21) Numéro de dépôt: 16177290.0
(22) Date de dépôt: 30.06.2016
(51) Int. Cl.: G06F 9/50

(54) **ARCHITECTURE CLIENT/SERVEUR POUR L ADMINISTRATION D'UN SUPERCALCULATEUR**

(30) Priorité: 17.09.2015 FR 1558775
(71) Demandeur: BULL SAS, 78340 Les Clayes sous Bois (FR)
(72) Inventeur: VIGNERAS, Pierre, 91470 ANGERVILLIERS (FR); MIQUEE, Sébastien, 91290 ARPAJON (FR)
(74) Mandataire: Novagraaf Technologies

(57) **Abrégé**

L'invention concerne notamment un serveur (S) d'administration d'un supercalculateur, adapté pour :
- charger préalablement des informations sur l'environnement dudit supercalculateur ;
- recevoir une tâche d'administration transmise par un client d'administration (C1, C2) ;
- exécuter ladite tâche d'administration en collaboration avec lesdites informations, préalablement chargées ;
- transmettre les résultats de l'exécution de ladite tâche d'administration vers ledit client d'administration.

## Description

### DOMAINE DE L'INVENTION

L'invention est relative au domaine des supercalculateurs. Plus précisément, elle concerne l'administration de tels supercalculateurs.

### CONTEXTE DE L'INVENTION

Un supercalculateur (ou superordinateur) est un système de traitement de l'information destiné à atteindre les plus hautes performances possibles pour le traitement de l'information. Les supercalculateurs sont des systèmes coûteux qui trouvent des applications dans des domaines spécifiques : prévisions météorologiques, modélisation moléculaire, simulations physiques ou mécaniques, calculs dans le domaine nucléaire... On trouve également des applications dans le domaine de la finance, dans le domaine militaire, etc.

Ces supercalculateurs sont, d'une façon générale, constitués d'une interconnexion d'un très grand nombre d'équipements. Ces équipements comprennent des noeuds de traitement (ou microprocesseurs), des noeuds de routage (ou routeurs), des noeuds de gestion, etc.

Ces dernières années, les supercalculateurs ont atteint des puissances de l'ordre du péta-FLOPS (ou PFLOPS), le FLOP (pour « Floating Point Operations Per Seconds ») étant l'unité de mesure communément admise pour évaluer la puissance d'un supercalculateur. Afin d'atteindre de tels niveaux de puissance, ces supercalculateurs peuvent comporter plusieurs centaines de milliers d'équipements interconnectés.

Les prochaines générations de supercalculateurs sont prévues pour atteindre l'exa-FLOP, soit un ordre de 10¹⁸ FLOPs. De tels supercalculateurs devraient comporter plusieurs dizaines de millions d'équipements.

Des systèmes d'administration, de gestion ou de surveillance ont été élaborés afin de permettre à un opérateur de contrôler, gérer, administrer, configurer ou détecter les dysfonctionnements des supercalculateurs.

Ces tâches d'administration sont extrêmement variées, et les problématiques se posant à l'administrateur ne sont pas toutes forcément connues à l'avance. Dès lors, les outils d'administration sont souvent des systèmes ouverts permettant à un administrateur (humain) de déterminer la tâche d'administration à effectuer en écrivant un programme informatique sous la forme d'un script, c'est-à-dire dans un langage informatique de haut-niveau et interprété.

Ces tâches peuvent correspondre à des problématiques d'administration variées : quels sont les équipements du supercalculateur en panne ? Quels sont les liens surchargés ? Quel est l'ensemble des équipements reliés à tel équipement donné ? Quel est l'ensemble des routes reliant deux équipements donnés ? Etc.

L'administrateur peut alors écrire dans chaque cas le script correspondant et l'exécuter via un outil d'administration fonctionnant sur un système de traitement de l'information associé au supercalculateur afin d'obtenir le résultat.

Pour ce faire, l'outil d'administration peut accéder à des informations sur l'environnement du supercalculateur. Ces informations comprennent notamment des informations sur la topologie du supercalculateur, c'est-à-dire, la façon dont sont interconnectés les différents noeuds du supercalculateur, qu'il s'agisse des noeuds de calcul, des noeuds de routage, des noeuds de gestion, etc. Elles peuvent également comprendre des informations sur les tables de routage, sur le statut des équipements, etc.

Toutefois, cette façon de faire soulève des problèmes avec l'apparition des supercalculateurs de grande capacité. Comme nous l'avons vu, ces supercalculateurs peuvent atteindre plusieurs dizaines de millions d'équipements. En conséquence, les informations sur l'environnement de tels supercalculateurs peuvent former un volume considérable. On peut évoquer des volumes de plusieurs dizaines de giga-octets.

Or, afin de traiter chaque tâche d'administration, l'outil d'administration doit charger en mémoire l'ensemble de ces informations. Du fait du volume considérable de celles-ci pour les nouveaux supercalculateurs, ce chargement en mémoire peut prendre plusieurs secondes, voire quelques minutes. Un tel délai appliqué à chaque tâche d'administration n'est évidemment pas acceptable pour un administrateur.

Il est à noter que dans certains cas, l'administrateur peut être amené à exécuter plusieurs tâches d'administration de suite, ou bien à tester une tâche d'administration plusieurs fois avant d'obtenir le résultat recherché. Le délai de plusieurs secondes voire minutes appliqué à chaque exécution rend cette pratique tout à fait inexploitable.

Le but de l'invention est donc de proposer un procédé et un système palliant au moins partiellement les inconvénients précités. Notamment, l'invention permet de réduire considérablement le temps de latence entre le déclenchement de l'exécution d'une tâche d'administration et l'obtention des résultats.

### RESUME DE L'INVENTION

Le but de la présente invention est de fournir une solution palliant au moins partiellement les inconvénients précités.

A cette fin, la présente invention propose un Procédé d'administration d'un supercalculateur, comprenant des étapes consistant à :
- déterminer une tâche d'administration sur un client d'administration ;
- transmettre ladite tâche d'administration, vers un serveur d'administration associé à des informations sur l'environnement dudit supercalculateur, lesdites informations étant préalablement chargées dans la mémoire dudit serveur ;
- exécuter ladite tâche d'administration en collaboration avec lesdites informations ;
- transmettre les résultats de l'exécution de ladite tâche d'administration vers ledit client d'administration.

Suivant des modes de réalisation préférés, l'invention comprend une ou plusieurs des caractéristiques suivantes qui peuvent être utilisées séparément ou en combinaison partielle entre elles ou en combinaison totale entre elles :
- ladite tâche d'administration est déterminée par la programmation d'un programme informatique par un utilisateur du client d'administration ;
- ladite tâche d'administration est un script écrit dans un langage informatique tel Python ;
- un processus dédié audit client d'administration exécute la tâche d'administration en collaboration avec lesdites informations ;
- lesdites informations sont accessibles dans le contexte du processus dédié selon un mécanisme de copie sur écriture ;
- lesdites informations sont mises à jour en fonction des changements de l'environnement du supercalculateur ;
- lorsque lesdites informations se mettent à jour, ladite tâche d'administration en cours d'exécution n'est pas affectée par la mise à jour.

Un autre aspect de la présente invention est un programme d'ordinateur comportant des moyens logiciels adaptés à la mise en oeuvre du procédé tel que précédemment décrit lorsque déclenchés par une plateforme de traitement de l'information.

Un autre aspect de la présente invention est un serveur d'administration d'un supercalculateur, adapté pour :
- charger préalablement des informations sur l'environnement dudit supercalculateur ;
- recevoir une tâche d'administration transmise par un client d'administration ;
- exécuter ladite tâche d'administration en collaboration avec lesdites informations, préalablement chargées ;
- transmettre les résultats de l'exécution de ladite tâche d'administration vers ledit client d'administration.

Selon un mode de réalisation, ce serveur peut comporter un processus principal pour charger préalablement des informations sur l'environnement dudit supercalculateur, et, à la réception d'une connexion d'un client d'administration, créer un processus dédié, ledit processus dédié étant adapté pour :
- recevoir une tâche d'administration transmise par ledit client d'administration ;
- exécuter ladite tâche d'administration en collaboration avec lesdites informations, préalablement chargées ;
- transmettre les résultats de l'exécution de ladite tâche d'administration vers ledit client d'administration.

Un autre aspect de la présente invention est un système comportant un serveur d'administration tel que précédemment décrit et au moins un client d'administration.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un exemple d'architecture client/serveur selon un mode de réalisation de l'invention.
La figure 2 représente de façon schématique une interface homme-machine susceptible d'être déployée sur un client d'administration selon une mise en oeuvre de l'invention.

### DESCRIPTION DETAILLEE DE L'INVENTION

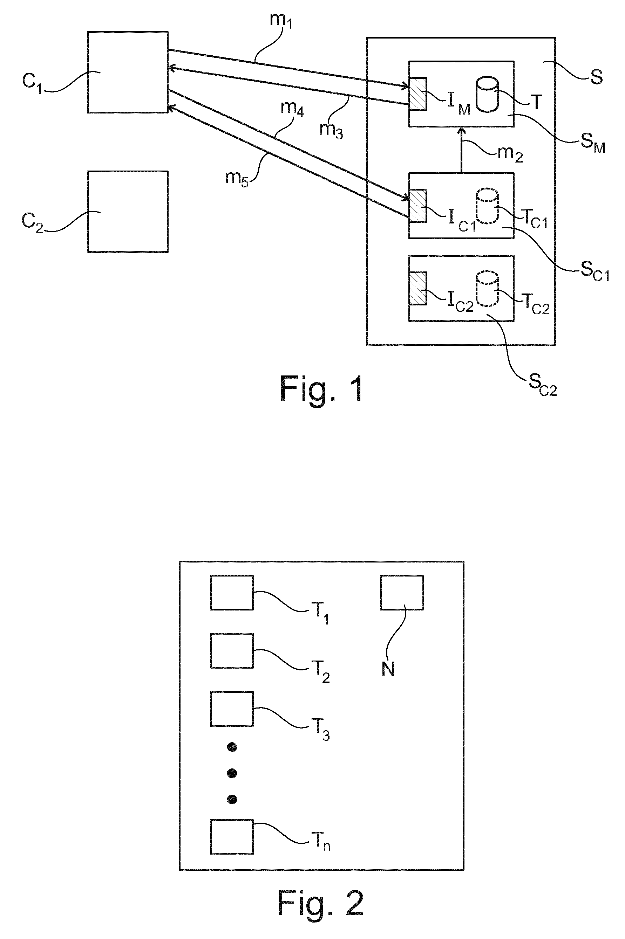

Ainsi que représenté sur la figure 1, le système selon l'invention se compose d'un serveur d'administration S et d'un ou plusieurs clients d'administration C1, C2. Les notions de serveur et de clients doivent ici être comprises dans leur sens logique ou fonctionnel : il peut par exemple s'agir de programmes informatiques distincts ou de processus distincts d'un même programme informatique. Ils peuvent notamment être mis en oeuvre sur des systèmes de traitement de l'information distincts et interagir par le truchement d'un réseau de communication connectant les différents systèmes de traitement.

Comme il est connu en soi, les systèmes de traitement de l'information sont équipés de systèmes d'exploitation, et éventuellement différentes couches d'intergiciels (ou « middleware » d'après la terminologie en langue anglaise plus habituelle), permettant de rendre les mécanismes de l'invention indépendants de l'infrastructure sous-jacente, et, donc, du fait de savoir si le serveur et le ou les clients sont distribués ou co-localisés et la façon dont ils interagissent physiquement.

Typiquement, le serveur S est un processus exécuté sur un système d'exploitation de type « Unix ».

Il charge en mémoire les informations sur l'environnement du supercalculateur. Ces informations peuvent être préalablement disponibles sur un serveur spécifique ou plusieurs serveurs spécifiques, notamment mémorisées sur un disque dur. Certaines informations peuvent être co-localisées sur le même système de traitement de l'information que le serveur S, d'autres peuvent être localisées sur un système distant, mais l'invention peut s'appliquer à ces différentes situations.

Le serveur S récupère les informations à partir d'une ou plusieurs sources et les charge, donc, dans une mémoire, typiquement la mémoire vive du système de traitement de l'information sur lequel il est lui-même déployé.

Ce chargement peut durer plusieurs secondes, voire plusieurs minutes, mais, comme il apparaitra clairement par la suite, ce chargement n'est effectué qu'une unique fois, lors du démarrage du serveur S. Il peut notamment être fait avant même une première demande d'un administrateur, de sorte qu'aucune latence ne soit introduite par ce chargement, même pour une première tâche d'administration. Il est aussi à noter qu'un mécanisme de rechargement permet de mettre jour les informations à disposition des tâches d'administration.

Les clients C1, C2 peuvent être également des processus exécutés sur un système d'exploitation de type « Unix ». Ils peuvent être des commandes directes ou disposer d'une interface homme-machine permettant l'interaction avec un administrateur humain.

La figure 2 schématise un exemple d'interface homme-machine. Sur un écran V sont affichés des boutons T1 T2, T3...Tn correspondant à n tâches d'administration prédéfinies. Ces tâches d'administration sont des programmes informatiques, c'est-à-dire des listes d'instructions exécutables par un système de traitement de l'information.

Par exemple, il peut s'agir de scripts, ou « scriptlets », écrits dans un langage informatique tel Python. Un langage de script est un langage de programmation qui permet de manipuler les fonctionnalités d'un système informatique configuré pour fournir à l'interpréteur de ce langage un environnement et une interface qui déterminent les possibilités de celui-ci. Le langage de script peut alors s'affranchir des contraintes de bas niveau - prises en charge par l'intermédiaire de l'interface - et bénéficier d'une syntaxe de haut niveau. Le langage de script est généralement exécuté à partir de fichiers contenant le code source du programme qui sera interprété.

A chaque bouton T1 T2, T3...Tn, est associé un script. La sélection d'un bouton donné entraine la sélection du script correspondant et sa transmission vers le serveur S.

Un bouton N peut être disponible également sur l'interface homme-machine, permettant, par sa sélection, de créer un nouveau script, ou, plus généralement, le programme informatique correspondant à la tâche d'administration. L'administrateur peut alors programmer le nouveau script, par exemple en langage Python, le sauvegarder et le transmettre au serveur S. Après sauvegarde, il peut être prévu qu'il devienne accessible à partir des boutons T1 T2, T3...Tn des tâches prédéfinies.

Lorsque le serveur S reçoit la tâche d'administration (sous la forme d'un programme exécutable, par exemple un scriptlet), les informations sur l'environnement du supercalculateur sont déjà chargées en mémoire. Il peut donc directement exécuter la tâche reçue, sans attente et sans latence, en collaboration avec ces informations sur l'environnement. Cette exécution, en soi, est conforme à l'état de la technique : il s'agit d'une exécution classique d'un programme informatique au sein du serveur S, donc certaines des fonctions interagissent avec le contenu des informations.

Une mise en oeuvre possible de l'invention consiste à proposer aux outils d'administration une interface de programmation, ou API (pour « Application Programming Interface ») permettant d'exposer une fonction « exec » qui peut avoir pour entrée un scriptlet et des éventuels paramètres « args », et en sortie un objet contenant les résultats de l'exécution du scriptlet. Pour le programme (l'outil d'administration) utilisant cette fonction, la façon dont l'exécution a lieu est transparente.

Cette fonction peut être définie ainsi :
def exec(scriptlet, args)

Cette fonction transmet le scriptlet passé en paramètre, avec les autres éventuels paramètres, vers le serveur S. Cette façon de faire permet d'exécuter localement ce scriptlet passé en paramètre sur le serveur, en tirant profit de son contexte environnemental.

Le trafic impliqué par cette façon de faire sur le réseau de communication liant le serveur S et le ou les clients est ainsi minimal, puisque il ne s'agit, dans un sens, que de quelques lignes de codes, et dans l'autre d'un objet contenant les résultats de l'exécution de la tâche d'administration.

Notamment, donc, les informations d'environnement restent localement sur le serveur S et ne transitent pas sur le réseau de communication.

Cette façon de faire est apparue avantageuse aux inventeurs par rapport à une exposition, dans une API, des différentes fonctions de manipulation des informations d'environnement permettant leur traitement à distance sur le serveur S depuis les clients C1, C2.

Il est notamment difficile de définir une telle interface car celle-ci est prise entre deux problématiques contradictoires :
D'une part, elle doit être suffisamment riche pour permettre un grand nombre de manipulations des informations afin de faire face à toutes les problématiques, non connues à l'avance, de l'administrateur.
D'autre part, les informations d'environnement étant souvent liés, l'exécution d'une fonction donnée peut avoir pour résultat une portion importante des informations, par exemple de la topologie. Une telle interface peut par exemple comprendre des fonctions définies comme :
   def get_all_switches()
   def get_all_ports()
   def get_all_links()
   def get_all_failing_switches()
   def get_all_failing_ports()
   def get_all_failing_links()

Cette portion transite alors sur le réseau de communication vers le client C1, C2 pour être traitée, et avant exécution de la fonction suivante. En tout état de cause, il n'y aucune limitation du volume de données pouvant être remonté par chacune des fonctions disponibles. Il en résulte qu'une telle architecture ne serait pas possible dans le cadre d'une base d'informations d'environnement de taille importante.

L'invention proposée permet donc bien de limiter au minimum le volume de données transitant entre le serveur S et les clients C1, C2.

Selon un mode de réalisation de l'invention, l'exécution de la tâche d'administration sur le serveur S distant est réalisée par un mécanisme RPC, pour *« Remote Procedure Call* » en langue anglaise. Elle peut se baser sur une infrastructure existante ou créée spécifiquement pour la mise en oeuvre de l'invention. Une telle infrastructure peut se baser sur l'infrastructure ZeroMQ. Comme il sera vu plus bas, une fonctionnalité intéressant de l'infrastructure sous-jacente est de supporter la fonction fork().

Selon un mode de réalisation de l'invention, cette fonction fork() permet au serveur S de gérer de façon avantageuse les accès concurrents provenant de plusieurs clients d'administration C1, C2.

Notamment, le fonctionnement du serveur S selon un mode de réalisation de l'invention permet de n'effectuer qu'un seul chargement des informations d'environnement, quelque soit le nombre de clients C1, C2 effectuant des tâches d'administration à un même moment.

Le serveur S contient lors de son démarrage un unique processus d'exécution S_{M}, dont le but est d'une part de charger les informations d'environnement T et d'attendre des requêtes m1 provenant des clients C1, C2 sur une interface I_{M}.

Ces requêtes peuvent être des transmissions de tâches d'administration ou des messages préalables, ou la simple connexion d'un client. A la réception d'une telle requête le premier processus S_{M} initie la création d'un processus fils S_{C1}, par exemple au moyen de la fonction fork().

Ce processus fils possède son propre espace d'adressage, et est dédié à la gestion du client C1 qui a adressé la requête.

Ce processus fils une fois créé, il transmet (référence m2 sur la figure 1) une adresse d'une interface I_{C1} associée au processus parent S_{M} qui peut alors le communiquer au client C1, en réponse (référence m3) à sa requête ml.

Dès lors, le client C1 utilise cette adresse pour toutes communications subséquentes m4 avec le serveur S. Cette interface Ici peut être un socket.

Le processus principal S_{M} n'effectue plus de traitement vis-à-vis du client C1, et attend une éventuelle autre requête de clients. Lorsque le client C2 transmet une telle requête, il créé alors un autre processus fils S_{C2} et, de la même façon, transmet au client C2 l'adresse de l'interface I_{C2} à utiliser par ce client C2 dans sa communication avec le serveur S.

Le client C1 transmet alors la tâche d'administration au socket Ici dédié via le message m4 ; et le client C2 transmet sa tâche d'administration au socket I_{C1} dédié. Bien entendu, l'invention ne se limite pas à deux clients simultanés mais peut gérer un nombre indifférent de clients se connectant au serveur S : autant de processus fils S_{C1}, S_{C2}... seront créés qu'il y a de clients C1, C2... connectés à un même instant.

Les processus fils S_{C1}, S_{C2} peuvent exécuter les tâches d'administration respectives, reçues sur leurs interfaces I_{C1}, I_{C2}, en collaboration avec les informations d'environnement.

Ces informations T ont été préalablement chargées dans la mémoire du serveur S par le processus principal T_{M}.

Ces informations peuvent être mises à jour lorsque l'environnement change. Un mécanisme est mis en place pour surveiller les modifications de l'environnement, par exemple avec l'utilisation d'une fonction « inotify ».

Ces mises à jour peuvent être transparentes pour les applications et pour les clients C1, C2. Concrètement, aucune interruption de service n'a lieu et les requêtes émanant des clients continuent d'être traités au fil de l'eau, tandis que les informations sont mises à jour en parallèle pour s'adapter aux changements de l'environnement du supercalculateur SC. La tâche d'administration en cours d'exécution n'est pas affectée par la mise à jour des informations d'environnement.

Les informations d'environnement sont accessibles dans le contexte des processus fils selon un mécanisme de copie sur écriture.

Par exemple, des copies T_{C1}, T_{C2}... de ces informations peuvent être réalisées au moment de la création des processus fils S_{C1}, S_{C2}, par exemple par l'exécution de la fonction fork(). Préférentiellement, il s'agit de «copies sur écriture», ou « cow » pour « copy on write » en langue anglaise.

Il s'agit initialement donc que d'une simple référence aux informations T préalablement chargée par le processus principal S_{M}. Uniquement en cas de modification de données au sein de ces informations, une copie locale des données modifiées est effectuée dans le contexte propre au processus fils correspondant. Cette copie locale est aussi effectuée lorsque les données du processus S_{M} sont mises à jour.

En conséquence, dans le cas où la tâche d'administration n'engendre aucune modification des informations d'environnement, le processus fils correspondant fonctionne en collaboration directement avec les informations chargées par le processus principal S_{M}. Toutefois, l'isolation des données entre processus et l'intégrité des informations d'administration sont assurées par la copie des données impactées par une éventuelle modification dans le contexte du processus fils, laissant ainsi la version originale T intacte.

Les processus fils S_{C1}, S_{C2} peuvent être prévus pour envoyer périodiquement des messages de type *« heartbeats »* indiquant au client C1, C2 respectif que la tâche d'administration est en cours d'exécution. Il peut y répondre, de sorte que chaque partie peut ainsi surveiller l'état de l'autre, et réagir en cas de problème de l'autre partie. Par exemple, si le client ne reçoit plus de messages périodiques, il peut en déduire que la tâche d'administration n'est plus exécutée par le serveur, et il peut alors, par exemple, transmettre une nouvelle requête au serveur S. Il peut aussi transmettre au processus principal S_{M} un message indiquant l'état du processus fils, lui demandant par exemple d'interrompre ce processus fils qui ne fonctionne plus.

Lorsque l'exécution de la tâche d'administration est achevée, le processus fils peut transmettre les résultats via un message m5 au client C1. Le processus fils S_{C1} peut alors se détruire.

Ainsi, non seulement il n'y a pas de chargement à chaque nouvelle requête d'un client, mais en outre, une unique instance des informations d'environnement est présente en mémoire, ce qui minimise les besoins en espace mémoire et en ressources.

En outre, le serveur est immédiatement disponible pour traiter les requêtes des nouveaux clients, car le processus principal est dédié à la réception de requêtes et à la création de processus fils dédiés : le traitement de chaque tâche d'administration est ainsi déporté vers un processus fils, afin de libérer le processus principal.

Les informations T sont constamment conservées chargées en mémoire, même si aucune tâche d'administration n'est en cours, afin de pouvoir traiter toute nouvelle tâche immédiatement, sans chargement des informations. Lors du traitement d'une nouvelle tâche, comme il a été vu précédemment, un processus dédié sera créé avec un accès aux informations via un mécanisme de copie sur écriture.

Selon un mode de réalisation, un processus fils S_{C1} peut être composé de deux parties distinctes, qui peuvent être mises en oeuvre, chacune, par un fil d'exécution respectif.

Une première partie peut être en charge de la communication à la fois avec le processus principal S_{M} du serveur et avec le client dédié C1, ainsi qu'avec la seconde partie.

Cette seconde partie peut être en charge de l'exécution de la tâche d'administration, en collaboration avec les informations d'environnement T, T_{C1}. Lorsque la tâche d'administration est terminée, la seconde partie transmet les résultats à la première partie, qui, à son tour, les transmet vers le client C1.

Bien entendu, la présente invention n'est pas limitée aux exemples et au mode de réalisation décrits et représentés, mais elle est susceptible de nombreuses variantes accessibles à l'homme de l'art.

## Revendications

1. Procédé d'administration d'un supercalculateur, comprenant des étapes consistant à :
- déterminer une tâche d'administration sur un client d'administration ;
- transmettre ladite tâche d'administration, vers un serveur d'administration associé à des informations sur l'environnement dudit supercalculateur, lesdites informations étant préalablement chargées dans la mémoire dudit serveur ;
- exécuter ladite tâche d'administration en collaboration avec lesdites informations ;
- transmettre les résultats de l'exécution de ladite tâche d'administration vers ledit client d'administration.

2. Procédé d'administration d'un supercalculateur selon la revendication 1, dans lequel ladite tâche d'administration est déterminée par la programmation d'un programme informatique par un utilisateur dudit client d'administration.

3. Procédé d'administration d'un supercalculateur selon l'une des revendications précédentes, dans lequel ladite tâche d'administration est un script écrit dans un langage informatique tel Python.

4. Procédé d'administration d'un supercalculateur selon l'une des revendications précédentes, dans lequel un processus dédié audit client d'administration exécute ladite tâche d'administration en collaboration avec lesdites informations.

5. Procédé d'administration selon la revendication précédente, dans lequel lesdites informations sont accessibles dans le contexte dudit processus dédié selon un mécanisme de copie sur écriture.

6. Procédé d'administration selon l'une des revendications 1 à 4, dans lequel lesdites informations sont mises à jour en fonction des changements de l'environnement dudit supercalculateur.

7. Procédé d'administration selon la revendication précédente, dans lequel lorsque lesdites informations se mettent à jour, ladite tâche d'administration en cours d'exécution n'est pas affectée par la mise à jour.

8. Serveur (S) d'administration d'un supercalculateur, adapté pour :
- charger préalablement des informations sur l'environnement dudit supercalculateur ;
- recevoir une tâche d'administration transmise par un client d'administration (C1, C2) ;
- exécuter ladite tâche d'administration en collaboration avec lesdites informations, préalablement chargées ;
- transmettre les résultats de l'exécution de ladite tâche d'administration vers ledit client d'administration.

9. Serveur d'administration selon la revendication 8, comportant un processus principal (S_{M}) pour charger préalablement des informations sur l'environnement dudit supercalculateur, et, à la réception d'une connexion d'un client d'administration (C1, C2), créer un processus dédié (S_{C1}, S_{C2}), ledit processus dédié étant adapté pour :
- recevoir une tâche d'administration transmise par ledit client d'administration ;
- exécuter ladite tâche d'administration en collaboration avec lesdites informations, préalablement chargées ;
- transmettre les résultats de l'exécution de ladite tâche d'administration vers ledit client d'administration.

10. Système comportant un serveur d'administration (S) selon l'une des revendications 8 ou 9 et au moins un client d'administration (C1, C2).
